# EUROPÄISCHE PATENTSCHRIFT

(11) **EP 0 870 742 B1**
(45) Veröffentlichungstag und Bekanntmachung des Hinweises auf die Patenterteilung: **14.05.2008**
(21) Anmeldenummer: 98103529.8
(22) Anmeldetag: 28.02.1998
(51) Int. Cl.: C04B 35/524, C01B 31/02, H01C 17/065

(54) **Verfahren zur Herstellung von pulverförmigem, glasartigen Kohlenstoff, eine daraus hergestellte Paste mit vorgegebener, elektrischer Leitfähigkeit sowie eine aus der Paste hergestellte Widerstandsschicht**
Method of making glassy carbon powder, a paste made thereof having a predetermined electrical conductivity, and a resistive layer made from the paste
Procédé de fabrication de poudre en carbone vitreux, une pâte fabriquée à partir de là, ayant une conductivité électrique prédéterminée, et une couche de résistance fabriquée à partir de la pâte

(30) Priorität: 09.04.1997 DE 19714561
(43) Veröffentlichungstag der Anmeldung: 14.10.1998
(73) Patentinhaber: Preh GmbH, 97616 Bad Neustadt a.d. Saale (DE)
(72) Erfinder: Ambros, Peter, 97618 Hohenroth (DE); Kissner, Franz, 97618 Hohenroth (DE); Johannes, Hugo, 97616 Brendlorenzen (DE)
(74) Vertreter: Dietrich, Barbara

(56) Entgegenhaltungen:
- PATENT ABSTRACTS OF JAPAN vol. 015, no. 403 (C-0875), 15. Oktober 1991 & JP 03 164416 A (SHOWA DENKO K.K.), 16. Juli 1991
- B. LERSMACHER ET AL.: "Glasartiger Kohlenstoff" CHEMIE-INGENIEUR-TECHNIK, Bd. 42, Nr. 9/10, 1970, Seiten 659-669, XP002096744 Weinheim, DE
- PATENT ABSTRACTS OF JAPAN vol. 015, no. 170 (E-1062), 30. April 1991 & JP 03 038004 A (NIPPON TEIKOUKI SEISAKUSHO K.K.), 19. Februar 1991

## Beschreibung

Die Erfindung betrifft ein Verfahren zur Herstellung einer Widerstandsschicht unter Verwendung einer Paste mit einem pulverförmigem, glasartigen Kohlenstoff und eine damit hergestellte Widerstandsschicht.

Glasartiger Kohlenstoff besitzt eine Mohs-Härte 6 und lässt sich daher nur unter erheblichem Aufwand pulverisieren.

Die Herstellung eines pulverförmigen, glasartigen Kohlenstoffs ist in der DE 27 18 308 A1 beschrieben. Hierbei wird eine Pyrolyse von Acrylsäureamiden im Gemisch mit wasserlöslichen Salzen durchgeführt und der Anteil des glasartigen Kohlenstoffs nach der Pyrolyse durch Auflösung des Salzanteiles im Wasser gewonnen. Danach wird der glasartige Kohlenstoff getrocknet und das so hergestellte Pulver je nach Notwendigkeit nochmals pulverisiert. Das Verfahren ist sehr zeitaufwendig.

Aus 'Plastverarbeiter' 41. Jahrgang 1990 Nr.6, Seiten 16 bis 21 ist bekannt, zur Herstellung von glasartigem Kohlenstoff ein Ausgangspolymer mit einer dreidimensional vernetzten Struktur zu verwenden, das nach einer Formgebung durch Gießen oder Pressen ausgehärtet und spanabhebend weiter bearbeitet wird. Aussagen zur einer möglichen Pulverisierung des glasartigen Kohlenstoffes sind nicht enthalten.

In der DE 30 02 112 A1 wird eine Paste zur Herstellung von Polymerschichtschaltungen mit vorgegebener elektrischer Leitfähigkeit beschrieben. Der vorgegebene elektrische Widerstand der zu erstellenden Polymerschichtschaltung wird hierbei durch Mischen der elektrisch leitfähigen und elektrisch isolierenden Schichtkomponenten erzielt. Der angestrebte Widerstandswert wird hierbei durch Zugabe der elektrisch isolierenden Komponente eingestellt.

Allgemein ist bekannt, dass der elektrische Leitwert einer Paste bzw. einer aus der Paste hergestellte Schicht, die als Mischung aus einer elektrisch leitfähigen und einer elektrisch isolierenden Komponente zusammengesetzt ist, weitgehend von der spezifischen elektrischen Leitfähigkeit und der Konzentration, d.h. einer Packungsdichte der leitfähigen Komponente im Schichtsystem bestimmt wird. Der elektrische Widerstand in der Schicht steigt dann nahezu exponentiell an, wenn die leitfähige Komponente ein kritisches Konzentrationsminimum in der Schicht erreicht hat. Bei einer Erhöhung der elektrischen leitfähigen Komponente stabilisiert sich der elektrische Widerstand nach Erreichen einer optimalen Konzentration. Bei einer gezielten Einstellung eines Widerstandswertes durch eine anteilige Erhöhung der elektrisch isolierenden Komponente hat dies unter Umständen zur Folge, dass die elektrische und mechanische Stabilität durch Inhomogenität der Schicht herabgesetzt wird.
Bei einer Anwendung dieser Paste für eine Widerstandsschicht, beispielsweise auf einem Potentiometer, verursacht die elektrische leitfähige Komponente Kohlenstoff eine typische elektrische Mikro-Inhomogenität der Schichtoberfläche und damit einen erhöhten Schicht-Schleifer-Übergangswiderstand.

Aus der EP 0 399 295 A1 ist bekannt, glasartigen Kohlenstoff als elektrisch leitfähige Komponente in einer Widerstandsschicht einzusetzen. Die Einstellung des elektrischen Widerstandswertes wird durch eine Veränderung der Konzentration beziehungsweise der Packungsdichte der elektrisch leitfähigen Komponente gegenüber der elektrisch isolierenden Komponente, beispielsweise einem Bindemittel, in der Widerstandsschicht erzielt. Um die guten Eigenschaften, wie mechanische und elektrische Stabilität beizubehalten, kann die optimale Konzentration beziehungsweise Packungsdichte der elektrisch leitfähigen Teilchen des glasartigen Kohlenstoffs, d.h. das Mischungsverhältnis der beiden Komponenten, nur in begrenztem Umfang variiert werden.

In der JP-A-03164416 wird ein glasartiges Kohlenstoffpulver und dessen Herstellung offenbart. Dabei wird ein Harz bzw. eine Mixtur unter Zufuhr von Wärme (60°C bis 90°C) ausgehärtet, wobei dieses aufschäumt (sich ausdehnt). Danach wird das ausgehärtete Harz entweder pyrolysiert (bzw. geröstet) und danach gebrochen oder erst gebrochen und danach pyrolysiert.

Es ist Aufgabe der Erfindung, ein Verfahren zur Herstellung einer Widerstandsschicht anzugeben, die unter Verwendung einer Paste dünn und gegenüber der Umgebung hochresistent ist.

Gelöst wird die Aufgabe durch die Merkmale des Patentanspruchs 1 sowie den Merkmalen des Patentanspruchs 8.

Vorteilhafte Ausführungen sind in den Unteransprüchen enthalten.

Erfindungsgemäß wird ein vorzugsweise aromatisches Polymer zu einem dreidimensional vernetzten Harz ausgehärtet und in diesem Zustand vor der Pyrolyse gemahlen. Das dabei entstehende Pulver wird in einer Inertatmosphäre, beispielsweise Stickstoff, pyrolysiert, so dass pulverisierte, glasartige Kohlenstoffe (auch Glaskohlepulver genannt) mit unterschiedlichen elektrischen Widerständen entstehen, die durch Vorgabe von unterschiedlichen Pyrolyseendtemperaturen beziehungsweise Pyrolysezeitdauer je Pyrolysevorgang festgelegt werden. Dabei wird die Abhängigkeit des elektrischen Widerstandes von der Pyrolysetemperatur und Pyrolysezeitdauer ausgenutzt, was in der Zeitschrift 'Chemie-Ingenieur-Technik' 42.Jahrgang 1970 Nr. 9/10 S. 663 näher beschrieben ist. Bei der Pyrolyse des Polymers in Pulverform kann die Pyrolysezeitdauer stark herabgesenkt werden, so dass eine Zeiteinsparung im Verfahren eintritt. Der pulverförmige, durch die Pyrolyse entstandene glasartige Kohlenstoff mit seinem spezifizierten elektrischen Widerstand, wird danach in ein Bindemittel eindispergiert und in einer Mühle zusammen mit dem Bindemittel auf eine Korngröße < 10 µm gemahlen. Anschließend wird die Viskosität der so gewonnenen Paste mit glasartigem Kohlenstoff zur Herstellung einer Widerstandsschicht durch Zugabe einer Lösungsmittelmenge zur Verdünnung eingestellt.

Aus der so hergestellten Paste ist es nun möglich, bei einer eingestellten jedoch gleichbleibenden Packungsdichte des glasartigen Kohlenstoffs, eine Widerstandsschicht mit einer maximalen mechanischen und elektrischen Stabilität herzustellen, bei der gleichzeitig ein Widerstandswert zwischen 0,2 KOhm bis 1 MOhm pro Quadratfläche vorgegeben werden kann.

Durch Zumischung von weiteren elektrisch leitfähigen Pigmenten, wie Graphit oder Ruß wird eine weitere Beeinflussung der elektrischen Leitfähigkeit des glasartigen Kohlenstoffes erreicht.
Auch kann die Leitfähigkeit des Glaskohlepulvers durch Zugabe eines Katalysators, beispielsweise einer Jodverbindung, beeinflußt werden, wobei der Katalysator gleichfalls vor der dreidimensionalen Vernetzung dem zu pyrolysierenden Harz beigemischt wird.
Die gleichzeitige Dispergierung und Mahlung des glasartigen Kohlenstoffes und des Bindemittels bei der Herstellung der Paste reduziert den Zeitaufwand und ermöglicht durch die weitere Zerkleinerung der Paste die Verwendung für dünne und gegenüber der Umgebung hochresistente Widerstandsschichten.

Anhand von Ausführungsbeispielen soll die Erfindung näher erläutert werden.

In einem Ausführungsbeispiel I wird ein Polymer, beispielsweise ein Phenolnovolack-Hexamethylen-Tetramin-Gemisch, in Pulverform bzw. Granulatform in einen Behälter gegeben und in einem Frischluftofen bei einer Temperatur von 150°C und einer Zeitdauer von vorzugsweise 30 Min. ausgehärtet. Der Härtungsvorgang ist begleitet mit einem Aufschäumen des Phenolnovolackes mit anschließendem Übergang in einen harten und spröden Zustand des nun dreidimensional vernetzten Harzes.

Das ausgehärtete Phenolnovolakharz wird beispielsweise in einer Ultrazentrifugalmühle auf eine Partikelgröße < 145 µm zerkleinert, d.h. pulverisiert. Davon werden Teile des Phenolnovolackpulvers in ein Reaktorrohr eines Rohrofens gegeben und das Reaktorrohr bei Raumtemperatur ca. 10 Min. mit Stickstoff gespült. Anschließend wird die Rohrofentemperatur um vorzugsweise 10° C/Min. erhöht. Das Phenolnovolackpulver verbleibt während der Pyrolyse in der inerten Atmosphäre Stickstoff. Nach Erreichen der eingestellten Pyrolyseendtemperatur, beispielsweise von 775°C, 850°C, 1000°C oder 2200°C, wird diese Temperatur ca. 3 Stunden beibehalten. Nach dieser Haltezeit wird die Rohrofenheizung ausgeschaltet und das Reaktorrohr unter Stickstoffdurchfluß auf Raumtemperatur abgekühlt.

Nach der erfolgten Abkühlung wird der Stickstoffdurchfluß abgeschaltet und der pulverförmige, durch die Pyrolyse nun glasartige Kohlenstoff dem Reaktorrohr entnommen. Der pulverförmige, glasartige Kohlenstoff weist je nach Pyrolyseendtemperatur bei gleichbleibender Pyrolysezeitdauer unterschiedliche elektrische Widerstandswerte auf.
Von den bei den Temperaturen 775°C, 850°C, 1000°C oder 2200°C hergestellten glasartigen Kohlenstoffen werden vorzugsweise 21 Gewichtsanteile in ein härtbares polymeres Bindemittelgemisch zur Herstellung einer Paste mit vorgegebener elektrischer Leitfähigkeit gegeben. Das vollständig zu vermischende Bindemittelgemisch besteht vorzugsweise aus

| | |
|---|---|
| 20 | Gewichtsanteilen vollverethertes Melaminharz, |
| 9 | Gewichtsanteilen gelöstes, gesättigtes Polyesterharz, |
| 10 | Gewichtsanteilen gelöstes, modifiziertes Esterimidharz, |
| 3 | Gewichtsanteilen saurer Katalysator, |
| 3 | Gewichtsanteilen Dispergiermittel (Efka P 401), |
| 1 | Gewichtsanteil Verlaufsmittel (Byk U), |
| 21 | Gewichtsanteilen Butylcarbitolacetat. |

Die grob vermischten Bestandteile des Bindemittels mit dem pulverförmigen, glasartigen Kohlenstoff werden in einer Planeten-Schnellmühle dispergiert, wobei der glasartige Kohlenstoff gleichzeitig auf eine Korn- beziehungsweise Partikelgröße < 8 µm zerkleinert wird, d.h. es wird in einem Durchgang dispergiert und zermahlen.

Nach dem erfolgten Dispergiermahlvorgang wird die so hergestellte Paste zur Herstellung einer Widerstandsschicht auf Siebdruckviskosität, beispielsweise 8500 cP eingestellt. Dazu wird der Paste eine Lösungsmittelmenge zur Verdünnung zugegeben, die für die Herstellung einer Widerstandsschicht vorgegeben ist. Die zugegebene Lösungsmittelmenge wird bei der Bindemittelzusammenstellung berücksichtigt. Die Vorgabe der nötigen Lösungsmittelmenge ergibt sich aus der Anpassung der Paste an eine herkömmliche Siebdruckvorrichtung. Die Lösungsmittelmenge, die je nach Vorrichtung und herzustellender Schichtdicke für die Viskosität notwendig ist, wird bei der Bindemittelzusammensetzung abgezogen, wodurch eine nachträgliche Beeinflussung des Widerstandswertes der Paste bei der Herstellung der Widerstandsschicht vermieden wird.

Die nun siebdruckfähige Paste wird mittels Siebdruckvorrichtung auf ein elektrisch isolierendes Substrat als Widerstandsschicht aufgedruckt. Es erfolgt eine Aushärtung der Schicht während einer Aushärtezeit von ca. 1 Stunde bei einer Temperatur von 230°C.

Die verschiedenen, ausgehärteten Widerstandsschichten ergeben bei einer gleichen Schichtdicke von beispielsweise 15 µm mit gleicher Menge des bei den unterschiedlichen Temperaturen hergestellten glasartigen Kohlenstoffs mit einer Partikelgröße < 8 µm in der Schicht unterschiedliche Quadratflächenwiderstandswerte.

Die Widerstandsschicht mit einem bei 775°C hergestellten glasartigen Kohlenstoff weist bei der Schichtdicke von 15 µm einen Widerstand von 32 KOhm pro Quadratfläche auf, während der Widerstandswert bei gleicher Schichtdicke und mit dem bei 2200°C hergestellten glasartigen Kohlenstoff ein Wert von 0,235 KOhm pro Quadratfläche besitzt.
Bei einer anderen erforderlichen Schichtdicke wird die Menge der jeweiligen notwendigen glasartigen Kohlenstoffe vorher errechnet, wobei die bereits ermittelten Widerstandswerte von anderen Schichtdicken hierbei berücksichtigt werden können.

Das Ausführungsbeispiel II gibt eine weitere Variante zur Beeinflussung der elektrischen Leitfähigkeit bzw. des elektrischen Widerstandes des pulverförmigen, glasartigen Kohlenstoffes an.

Dazu werden beispielsweise 75 Gewichtsanteile Phenolnovolak-Hexamethylentetran als pulverförmiges Gemisch, in einem Glaskolben mit 800 ml Aceton gelöst. Zu dieser Lösung werden 5 Gewichtsanteile Pudergraphit der Korngröße < 35 µm eingerührt. Danach werden die 800 Gewichtsanteile Aceton unter ständigem Rühren der Dispersion abdestilliert.

Das Gemisch von Phenolnovolak- und Pudergraphitdispersion wird in einen Behälter umgefüllt und wie im Ausführungsbeispiel I im Frischluftofen bei einer Temperatur von 150°C ca. 30 Min. lang ausgehärtet.
Die weiteren Verfahrensschritte laufen wie in dem Ausführungsbeispiel I ab.

Durch diese Variante erhält das Gemisch von Anfang an einen anderen elektrischen Widerstand. Das Pudergraphit bewirkt, daß der bei der Pyrolyse entstehende glasartige Kohlenstoff eine modifizierte Kristallstruktur als im Ausführungsbeispiel I aufweist. Diese andere Kristallstruktur ähnelt mehr der Kristallstruktur des Graphits. Dadurch wird der glasartige Kohlenstoff elektrisch leitfähiger, so daß bei gleicher Polymerschichtdicke, gleicher Packungsdichte und gleicher Pyrolyseendtemperatur/Pyrolysezeitdauer unterschiedliche Quadratflächenwiderstände herstellbar sind. So weist die Widerstandsschicht beim Ausführungsbeispiel I bei einer Pyrolyseendtemperatur von 1000°C einen Quadratflächenwiderstandswert von 0,46 KOhm pro Quadratfläche auf, während der Quadratflächenwiderstandswert beim Ausführungsbeispiel II bei selbiger Pyrolyseendtemperatur nur bei 0,185 KOhm pro Quadratfläche liegt, wodurch die hergestellte Widerstandsschicht selbst niederohmiger wird.

Es versteht sich von selbst, daß im Rahmen des erfinderischen Gedankens Änderungen möglich sind.

So können als Ausgangsmaterial zur Herstellung des glasartigen, pulverförmigen Kohlenstoffes neben den aromatischen Polymeren eine Reihe von natürlichen und synthetischen Polymeren eingesetzt werden.

In vorteilhafter Weise werden beispielsweise Polyphenylene, Polyimide, aromatische Epoxydharze, Polyphenole und Furanalharze als hochvernetzte, aromatische Polymere verwendet.

Neben Pudergraphit und / oder Ruß als elektrisch leitende Pigmente ist auch Nickel einzeln oder kombinierbar verwendbar. Diese können zusätzlich auch in bekannter Art und Weise mit in das Bindemittelgemisch eindispergiert werden.

Als Bindemittel für die erfindungsgemäße Paste zur Herstellung der Widerstandsschicht sind grundsätzlich alle Mitglieder aus der Familie der härtbaren Harze modifiziert beziehungsweise kombiniert anwendbar. Diese Harze sind beispielsweise Alkyde, Epoxyde, Melamine, Polyacryle, Polyester, Polyimide, Polyphenole, Polyurethane und weitere.

Als Zusatz für die Kristallbildung des Kohlenstoffes sind neben Jodbenzol auch Borsäure, Eisenoxide, Bromstyrole anwendbar, die gleichfalls vor der dreidimensionalen Vernetzung dem zu pyrolysierenden Harz beigemischt werden.

Die glasartigen Kohlenstoffe mit verschiedenen elektrischen Widerständen können in einer Paste untereinander vermischt werden.
Statt bzw. neben der Wahl von unterschiedlichen Pyrolyseendtemperaturen kann auch die Pyrolysezeitdauer unterschiedlich eingestellt werden, um einen glasartigen Kohlenstoff mit unterschiedlichen elektrischen Widerständen herzustellen.

## Patentansprüche

1. Verfahren zur Herstellung einer Widerstandsschicht unter Verwendung einer Paste, die aus einer Mischung einer elektrisch isolierenden und einer elektrisch leitfähigen Komponente hergestellt wird, wobei die elektrisch leitfähige Komponente glasartige Kohlenstoffe beinhaltet und der glasartige Kohlenstoff mittels Pyrolyse in einer inerten Atmosphäre aus einen Polymer zu einem dreidimensional vernetzten Harz ausgehärtet und vor der Pyrolyse zu Pulver zerkleinert wird und die Paste durch Zugabe eines Lösungsmittels siebdruckfähig wird, **dadurch gekennzeichnet, dass**
- der pulverförmige, glasartige Kohlenstoff mit einem Bindemittel als elektrisch isolierende Komponente dispergiert und gleichzeitig zerkleinert wird und
- die Zerkleinerung auf eine Partikelgröße < 10 µm erfolgt.

2. Verfahren zur Herstellung einer Paste nach Anspruch 1, **dadurch gekennzeichnet, dass** die Zerkleinerung auf eine Partikelgröße < 8 µm erfolgt.

3. Verfahren zur Herstellung einer Paste nach Anspruch 1 oder 2, **dadurch gekennzeichnet, dass** die glasartigen Kohlenstoffe mit verschiedenen elektrischen Widerstandswerten in einer Paste untereinander gemischt werden.

4. Verfahren zur Herstellung einer Widerstandsschicht nach Anspruch 1 bis 3, **dadurch gekennzeichnet, dass** dem Bindemittel 21 Gewichtsanteile glasartiger Kohlenstoff zugemischt werden.

5. Verfahren zur Herstellung einer Widerstandsschicht nach Anspruch 1 bis 4, **dadurch gekennzeichnet, dass** dem Bindemittel 5 Gewichtsanteile Pudergraphit und/oder Ruß und/oder Nickel zugemischt werden.

6. Verfahren zur Herstellung einer Widerstandsschicht nach Anspruch 1 bis 5, **dadurch gekennzeichnet, dass** als Polymer ein aromatisches, natürliches oder synthetisches Polymer verwendet wird.

7. Verfahren zur Herstellung einer Widerstandsschicht nach Anspruch 1 bis 6, **dadurch gekennzeichnet, dass** das ausgehärtete Harz auf eine Partikelgröße < 145 µm zerkleinert wird.

8. Serie von einer von nach einem Verfahren nach Anspruch 1 hergestellten Widerstandsschichten, die einen Widerstandwert zwischen 0,2 KOhm und 1 MOhm pro Quadratfläche und eine eingestellte jedoch gleich bleibende Packungsdichte des glasartigen Kohlenstoffs aufweisen.

9. Widerstandsschicht bestehend aus einem in einem Binder dispergierten glasartigen Kohlenstoff, **dadurch gekennzeichnet, dass** nach einem Verfahren gemäß Anspruch 1 bis 7 hergestellt ist, mit einer Partikelgröße von < 10 µm und einem Widerstandswert zwischen 0,2 KOhm und 1 MOhm, wobei in der in dem beanspruchten Verfahren verwendeten Paste glasartige Kohlenstoffe mit verschiedenen elektrischen Widerständen vermischt vorliegen.

10. Widerstandsschicht nach Anspruch 9, **dadurch gekennzeichnet, dass** die Partikelgröße < 8 µm ist.

11. Widerstandsschicht nach einem der Ansprüche 9 oder 10, **dadurch gekennzeichnet, dass** die Widerstandsschicht Pudergraphit und/oder Ruß und/oder Nickel enthält.

## Claims

1. A method of producing a resistive layer by using a paste made of a mixture of an electrically insulating component and an electrically conductive component, the electrically conductive component comprising vitreous carbons and the vitreous carbon being cured by pyrolysis in an inert atmosphere from a polymer to form a three-dimensionally crosslinked resin and being comminuted to powder before the pyrolysis and the paste becoming screen printable on addition of a solvent, **characterized in that**
- the powdery, vitreous carbon is dispersed with a binder as an electrically insulating component and comminuted at the same time and
- the comminuting is to a particle size < 10 µm.

2. A method of producing a paste according to claim 1, **characterized in that** the comminuting is to a particle size < 8 µm.

3. A method of producing a paste according to claim 1 or 2, **characterized in that** the vitreous carbons having different electrical resistance values are mixed with each other in a paste.

4. A method of producing a resistive layer according to claim 1 to 3, **characterized in that** the binder is admixed with 21 parts by weight of vitreous carbon.

5. A method of producing a resistive layer according to claim 1 to 4, **characterized in that** the binder is admixed with 5 parts by weight of graphite powder and/or carbon black and/or nickel.

6. A method of producing a resistive layer according to claim 1 to 5, **characterized in that** an aromatic, natural or synthetic polymer is used.

7. A method of producing a resistive layer according to claim 1 to 6, **characterized in that** the cured resin is comminuted to a particle size < 145 µm.

8. A series of resistive layers produced by a process according to claim 1 which have a resistance value between 0.2 kOhm and 1 MOhm per square unit area and a set but constant packing density for the vitreous carbon.

9. A resistive layer consisting of a vitreous carbon dispersed in a binder, **characterized in that** it is produced by a process according to claim 1 to 7 with a particle size of < 10 µm and a resistance value between 0.2 KOhm and 1 MOhm, the paste used in the claimed process comprising a mixture of vitreous carbons having different electrical resistances.

10. A resistive layer according to claim 9, **characterized in that** the particle size is < 8 µm.

11. A resistive layer according to either of claims 9 and 10, **characterized in that** the resistive layer contains graphite powder and/or carbon black and/or nickel.

## Revendications

1. Procédé de production d'une couche résistante avec utilisation d'une pâte qui est préparée à partir d'un mélange d'un composant électriquement isolant et d'un composant électriquement conducteur, le composant électriquement conducteur contenant des carbones vitreux et le carbone vitreux étant durci par pyrolyse dans une atmosphère inerte, à partir d'un polymère, en une résine réticulée tridimensionnellement et broyé avant la pyrolyse en une poudre et la pâte devenant apte à la sérigraphie par l'addition d'un solvant, **caractérisé en ce que**
- le carbone poudreux, vitreux est dispersé et simultanément broyé avec un liant comme composant électriquement conducteur et
- le broyage est réalisé à une grosseur de particule < 10 µm.

2. Procédé pour la préparation d'une pâte selon la revendication 1, **caractérisé en ce que** le broyage est réalisé à une grosseur de particule < 8 µm.

3. Procédé pour la préparation d'une pâte selon la revendication 1 ou 2, **caractérisé en ce que** les carbones vitreux avec différentes valeurs de résistance électrique sont mélangés les uns avec les autres dans une pâte.

4. Procédé pour la préparation d'une couche de résistance selon la revendication 1 à 3, **caractérisé en ce que** le liant est mélangé avec 21 parties en poids de carbone vitreux.

5. Procédé pour la préparation d'une couche de résistance selon la revendication 1 à 4, **caractérisé en ce que** le liant est mélangé avec 5 parties en poids de graphite en poudre et/ou de suie et/ou de nickel.

6. Procédé pour la préparation d'une couche de résistance selon la revendication 1 à 5, **caractérisé en ce qu'**on utilise comme polymère un polymère aromatique, naturel ou synthétique.

7. Procédé pour la préparation d'une couche de résistance selon la revendication 1 à 6, **caractérisé en ce que** la résine durcie est broyée à une grosseur de particule < 145 µm.

8. Série de couches de résistance préparées selon un procédé selon la revendication 1, qui présentent une valeur de résistance entre 0,2 KOhm et 1 MOhm par surface carrée et qui présentent une densité tassée réglée, mais restant identique, du carbone vitreux.

9. Couche de résistance constituée par un carbone vitreux dispersé dans un liant, **caractérisée en ce qu'**elle est préparée selon un procédé selon la revendication 1 à 7, avec une grosseur de particule < 10 µm et une valeur de résistance entre 0,2 KOhm et 1 MOhm, où, dans la pâte utilisée dans le procédé revendiqué, se trouvent en mélange les uns avec les autres des carbones vitreux présentant des résistances électriques différentes.

10. Couche de résistance selon la revendication 9, **caractérisée en ce que** la grosseur de particule est < 8 µm.

11. Couche de résistance selon l'une quelconque des revendications 9 ou 10, **caractérisée en ce que** la couche de résistance contient du graphite en poudre et/ou du nickel.
